(19) Europäisches Patentamt
European Patent Office
Office européen des brevets

(11) **EP 3 168 417 B1**

(12) **EUROPEAN PATENT SPECIFICATION**

(45) Date of publication and mention
of the grant of the patent:
**04.09.2019 Bulletin 2019/36**

(51) Int Cl.:
**F01D 9/04** (2006.01)  **F01D 5/14** (2006.01)

(21) Application number: **16198475.2**

(22) Date of filing: **11.11.2016**

(54) **OPTIMAL LIFT DESIGNS FOR GAS TURBINE ENGINES**

OPTIMALE AUFZUGSENTWÜRFE FÜR GASTURBINENMOTOREN

CONCEPTIONS DE SUSTENTATION OPTIMALE POUR TURBINE À GAZ

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **16.11.2015 US 201514941706**

(43) Date of publication of application:
**17.05.2017 Bulletin 2017/20**

(73) Proprietor: **General Electric Company
Schenectady, NY 12345 (US)**

(72) Inventors:
• **WADIA, Aspi Rustom
Cincinnati, OH 45215 (US)**
• **DAILEY, Lyle Douglas
Cincinnati, OH 45215 (US)**
• **JOHNSON, Christopher Ryan
Cincinnati, OH 45215 (US)**
• **MOLLMANN, Daniel Edward
Cincinnati, OH 45252 (US)**

(74) Representative: **Openshaw & Co.
8 Castle Street
Farnham, Surrey GU9 7HR (GB)**

(56) References cited:
**EP-A1- 2 921 647     EP-A2- 1 524 405
EP-A2- 1 798 377     EP-A2- 2 492 440
EP-A2- 2 543 829     US-A1- 2010 284 801**

**Description**

FIELD

The present subject matter relates generally to a gas turbine engine, or more particularly to an optimal or high lift design for one or more turbine sections of a gas turbine engine. Most particularly, the present subject matter relates to optimal lift designs for turbine rotor blades and turbine stator vanes.

BACKGROUND

A gas turbine engine generally includes a fan and a core arranged in flow communication with one another. Additionally, the core of the gas turbine engine general includes, in serial flow order, a compressor section, a combustion section, a turbine section, and an exhaust section. In operation, air is provided from the fan to an inlet of the compressor section where one or more axial compressors progressively compress the air until it reaches the combustion section. Fuel is mixed with the compressed air and burned within the combustion section to provide combustion gases. The combustion gases are routed from the combustion section to the turbine section. The flow of combustion gases through the turbine section drives the turbine section and is then routed through the exhaust section, e.g., to atmosphere.

In general, turbine performance and efficiency may be diminished if a turbine design is below or above the optimum lift level, e.g., if a rotor blade solidity value and/or stator vane solidity value of the turbine stages is too high or too low. For example, if the design has an excessive solidity, such that the design is below the optimum lift level, the design may employ an excessive number of airfoils or chord length, which may increase the length, weight, and cost of the turbine section; may have too much wetted surface area, which can result in increased profile losses; and/or may have increased trailing edge losses. As another example, if the solidity value is too low, such that the design is above the optimum lift level, the turbine may have increased losses due to high peak Mach numbers inside the airfoil row; may have higher rear diffusion on the airfoil suction sides; and/or may have increased secondary flow or end wall losses. Moreover, typical turbine designs have utilized lower through flows to reduce Mach number losses and blade rows with very high solidities and lower Zweifel lift coefficients to prevent the airfoils-more specifically, the end walls-from separation. Such designs result in turbine modules that are heavier and more expensive than necessary. Other negative performance and/or efficiency characteristics also may be experienced if the lift level is above or below its optimal level.

Therefore, turbine performance and efficiency may be improved by achieving an optimum turbine lift level. Accordingly, a turbine assembly for a gas turbine engine having features for achieving an optimal lift of the turbine assembly is desirable. More particularly, a turbine assembly for a gas turbine engine having turbine rotor blades and/or stator vanes with decreased chord lengths in a mid-span region of the blades or vanes to optimize the Zweifel lift coefficient of the turbine assembly would be useful. US 2010/0284801 A1 relates to a turbomachine blade in which the chord length in the middle region of the blade airfoil is short than the chord lengths in the tip-side and root-side regions of the blade airfoil. EP 1 798 377 A2 relates to an airfoil embodying mixed loading conventions, in which the distribution of loading on an airfoil surface is different at different spanwise locations, i.e. root, mid-span and tip sections being subject to their own specific loading convention. EP 2 921 647 A1 relates to a gas turbine blade having bent leading and trailing edges and is concerned with reducing the likelihood of resonance excitation of a rotating turbine blade and discloses the features of the preamble of claim 1.

BRIEF DESCRIPTION

Aspects and advantages of the invention will be set forth in part in the following description, or may be obvious from the description, or may be learned through practice of the invention.

In one exemplary aspect of the present disclosure, a turbine assembly for a gas turbine engine is provided in accordance with claim 1. The turbine assembly includes a casing having an inner surface and extending circumferentially about an axial centerline. The casing defines a radially outer boundary of the turbine assembly. The turbine assembly further includes a disk positioned coaxially within the casing. The disk has a rim, and the rim of the disk defines a perimeter of the disk. The turbine assembly also includes a row of circumferentially adjacent turbine stator vanes extending radially inward from the inner surface of the casing and a row of circumferentially adjacent turbine rotor blades extending radially outward from the perimeter of the disk. The row of blades is positioned adjacent the row of vanes. Each blade in the row of blades includes an airfoil. Each airfoil has opposite pressure and suction sides extending radially along a blade span from a blade root to a blade tip. The blade span includes a plurality of blade span locations, each blade span location corresponding to a fraction of the blade span. Each airfoil also defines a chord at each blade span location. The chords extend axially between opposite leading and trailing edges of the airfoil. The chords in a mid-span region of each blade are shorter than the chords in a span region adjacent to the blade root and a span region adjacent to the blade tip, wherein the shorter chord length in the mid-span region of each blade is such that each blade has a Zweifel coefficient within a range of about 1.2 to about 1.3. Each blade has a stagger angle ($\lambda$) within a range of about 10° to about 80°.

In another exemplary aspect of the present disclosure, a turbine assembly for a gas turbine engine is provided. The turbine assembly includes a casing having an inner surface and extending circumferentially about an axial centerline. The casing defines a radially outer boundary of the turbine assembly. The turbine assembly also includes a disk positioned co-axially within the casing. The disk has a rim, and the rim of the disk defines a perimeter of the disk. The turbine assembly further includes a row of circumferentially adjacent turbine stator vanes extending radially inward from the inner surface of the casing. The turbine assembly also includes a row of circumferentially adjacent turbine rotor blades extending radially outward from the perimeter of the disk. The row of blades is positioned adjacent the row of vanes. Each vane in the row of vanes includes an airfoil, and each airfoil has opposite pressure and suction sides extending radially along a vane span from a vane root to a vane tip. The vane span includes a plurality of vane span locations. Each vane span location corresponds to a fraction of the vane span. Each airfoil defines a chord at each vane span location. The chords extend axially between opposite leading and trailing edges of the airfoil, and the chords in a mid-span region of each vane are shorter than the chords in a span regions adjacent to the vane root and a span region adjacent to the vane tip.

These and other features, aspects and advantages of the present invention will become better understood with reference to the following description and appended claims. The accompanying drawings, which are incorporated in and constitute a part of this specification, illustrate aspects of the invention and, together with the description, serve to explain the principles of the invention.

## BRIEF DESCRIPTION OF THE DRAWINGS

A full and enabling disclosure of the present invention, including the best mode thereof, directed to one of ordinary skill in the art, is set forth in the specification, which makes reference to the appended figures, in which:

FIG. 1 is a schematic cross-sectional view of an exemplary gas turbine engine according to various embodiments of the present subject matter.

FIG. 2 provides a schematic illustration of a partial cross-section of a turbine assembly according to an exemplary embodiment of the present subject matter.

FIG. 3 provides a schematic illustration of a row of turbine rotor blades of the turbine assembly of FIG. 2 according to an exemplary embodiment of the present subject matter.

FIG. 4 provides a perspective view of a portion of an airfoil of a turbine rotor blade according to an exemplary embodiment of the present subject matter.

## DETAILED DESCRIPTION

Reference will now be made in detail to present embodiments of the invention, one or more examples of which are illustrated in the accompanying drawings. The detailed description uses numerical and letter designations to refer to features in the drawings. Like or similar designations in the drawings and description have been used to refer to like or similar parts of the invention. As used herein, the terms "first," "second," and "third" may be used interchangeably to distinguish one component from another and are not intended to signify location or importance of the individual components. The terms "upstream" and "downstream" refer to the relative direction with respect to fluid flow in a fluid pathway. For example, "upstream" refers to the direction from which the fluid flows and "downstream" refers to the direction to which the fluid flows.

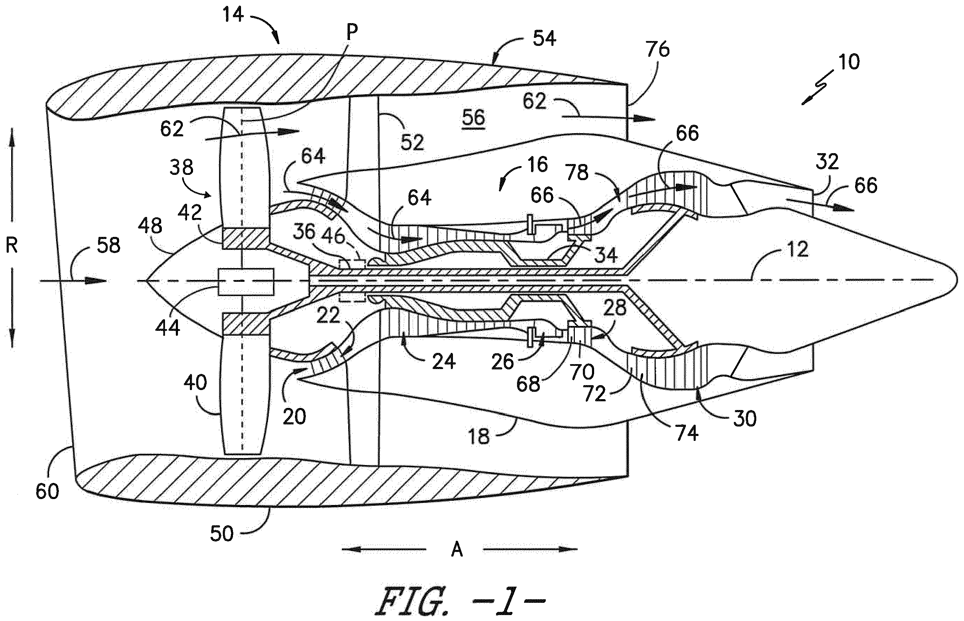

Referring now to the drawings, wherein identical numerals indicate the same elements throughout the figures, FIG. 1 is a schematic cross-sectional view of a gas turbine engine in accordance with an exemplary embodiment of the present disclosure. More particularly, for the embodiment of FIG. 1, the gas turbine engine is a high-bypass turbofan jet engine 10, referred to herein as "turbofan engine 10." As shown in FIG. 1, the turbofan engine 10 defines an axial direction A (extending parallel to a longitudinal centerline 12 provided for reference) and a radial direction R. In general, the turbofan 10 includes a fan section 14 and a core turbine engine 16 disposed downstream from the fan section 14.

The exemplary core turbine engine 16 depicted generally includes a substantially tubular outer casing 18 that defines an annular inlet 20. The outer casing 18 encases, in serial flow relationship, a compressor section including a booster or low pressure (LP) compressor 22 and a high pressure (HP) compressor 24; a combustion section 26; a turbine section including a high pressure (HP) turbine 28 and a low pressure (LP) turbine 30; and a jet exhaust nozzle section 32. A high pressure (HP) shaft or spool 34 drivingly connects the HP turbine 28 to the HP compressor 24. A low pressure (LP) shaft or spool 36 drivingly connects the LP turbine 30 to the LP compressor 22.

For the embodiment depicted, the fan section 14 includes a variable pitch fan 38 having a plurality of fan blades 40 coupled to a disk 42 in a spaced apart manner. As depicted, the fan blades 40 extend outward from disk 42 generally along the radial direction R. Each fan blade 40 is rotatable relative to the disk 42 about a pitch axis P by virtue of the fan blades 40 being operatively coupled to a suitable actuation member 44 configured to collectively vary the pitch of the fan blades 40 in unison. The fan blades 40, disk 42, and actuation member 44 are together rotatable about the longitudinal axis 12 by LP shaft 36 across a power gear box 46. The power gear box 46 includes a plurality of gears for stepping down the rotational speed of the LP shaft 36 to a more efficient rotational fan speed.

Referring still to the exemplary embodiment of FIG. 1, the disk 42 is covered by rotatable front nacelle 48 aerodynamically contoured to promote an airflow through the plurality of fan blades 40. Additionally, the exemplary fan section 14 includes an annular fan casing or outer nacelle 50 that circumferentially surrounds the fan 38 and/or at least a portion of the core turbine engine 16. It should be appreciated that the nacelle 50 may be configured to be supported relative to the core turbine engine 16 by a plurality of circumferentially-spaced outlet guide vanes 52. Moreover, a downstream section 54 of the nacelle 50 may extend over an outer portion of the core turbine engine 16 so as to define a bypass airflow passage 56 therebetween.

During operation of the turbofan engine 10, a volume of air 58 enters the turbofan 10 through an associated inlet 60 of the nacelle 50 and/or fan section 14. As the volume of air 58 passes across the fan blades 40, a first portion of the air 58 as indicated by arrows 62 is directed or routed into the bypass airflow passage 56 and a second portion of the air 58 as indicated by arrow 64 is directed or routed into the LP compressor 22. The ratio between the first portion of air 62 and the second portion of air 64 is commonly known as a bypass ratio. The pressure of the second portion of air 64 is then increased as it is routed through the high pressure (HP) compressor 24 and into the combustion section 26, where it is mixed with fuel and burned to provide combustion gases 66.

The combustion gases 66 are routed through the HP turbine 28 where a portion of thermal and/or kinetic energy from the combustion gases 66 is extracted via sequential stages of HP turbine stator vanes 68 that are coupled to the outer casing 18 and HP turbine rotor blades 70 that are coupled to the HP shaft or spool 34, thus causing the HP shaft or spool 34 to rotate, thereby supporting operation of the HP compressor 24. The combustion gases 66 are then routed through the LP turbine 30 where a second portion of thermal and kinetic energy is extracted from the combustion gases 66 via sequential stages of LP turbine stator vanes 72 that are coupled to the outer casing 18 and LP turbine rotor blades 74 that are coupled to the LP shaft or spool 36, thus causing the LP shaft or spool 36 to rotate, thereby supporting operation of the LP compressor 22 and/or rotation of the fan 38.

The combustion gases 66 are subsequently routed through the jet exhaust nozzle section 32 of the core turbine engine 16 to provide propulsive thrust. Simultaneously, the pressure of the first portion of air 62 is substantially increased as the first portion of air 62 is routed through the bypass airflow passage 56 before it is exhausted from a fan nozzle exhaust section 76 of the turbofan 10, also providing propulsive thrust. The HP turbine 28, the LP turbine 30, and the jet exhaust nozzle section 32 at least partially define a hot gas path 78 for routing the combustion gases 66 through the core turbine engine 16.

In some embodiments, components of turbofan engine 10, particularly components within hot gas path 78, may be comprised of a ceramic matrix composite (CMC) material, which is a non-metallic material having high temperature capability. Exemplary CMC materials utilized for such components may include silicon carbide, silicon, silica, or alumina matrix materials and combinations thereof. Ceramic fibers may be embedded within the matrix, such as oxidation stable reinforcing fibers including monofilaments like sapphire and silicon carbide (e.g., Textron's SCS-6), as well as rovings and yarn including silicon carbide (e.g., Nippon Carbon's NICALON®, Ube Industries' TYRANNO®, and Dow Coming's SYLRAMIC®), alumina silicates (e.g., Nextel's 440 and 480), and chopped whiskers and fibers (e.g., Nextel's 440 and SAFFIL®), and optionally ceramic particles (e.g., oxides of Si, Al, Zr, Y, and combinations thereof) and inorganic fillers (e.g., pyrophyllite, wollastonite, mica, talc, kyanite, and montmorillonite). As further examples, the CMC materials may also include silicon carbide (SiC) or carbon fiber cloth.

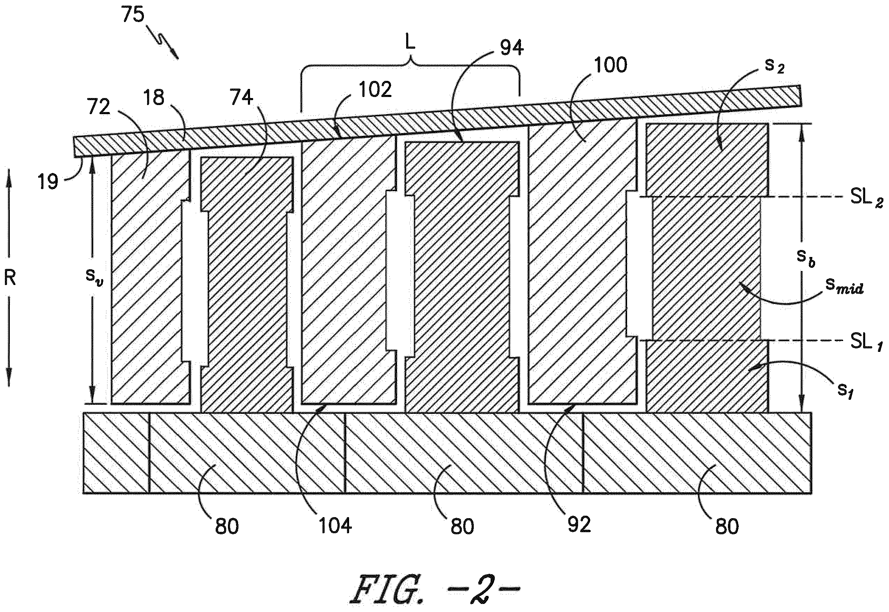

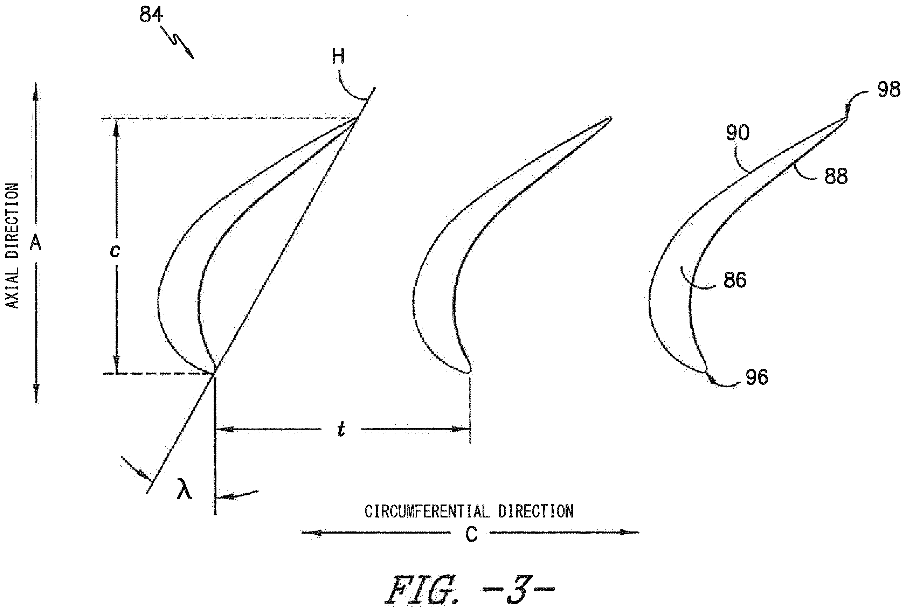

Referring now to FIGS. 2 and 3, FIG. 2 provides a schematic illustration of a partial cross-section of LP turbine 30, forming a turbine assembly 75, according to an exemplary embodiment of the present subject matter. FIG. 3 provides a schematic illustration of a row 84 of LP turbine rotor blades 74. As previously described, LP turbine 30 includes sequential stages of turbine stator vanes 72 coupled to outer casing 18 and turbine rotor blades 74 coupled to shaft or spool 36. As shown in FIG. 2, blades 74 are coupled to shaft or spool 36 via turbine rotor disks 80, i.e., blades 74 are coupled to disks 80, which in turn are coupled to shaft or spool 36 (FIG. 1). Each disk 80 has a rim defining a perimeter of the disk. Further, each disk 80 is positioned within outer casing 18 such that disks 80 are coaxial with casing 18. Disks 80 and outer casing 18 form an inner end wall and an outer end wall, respectively, of hot gas path 78 through turbine assembly 75.

Blades 74 are coupled to disks 80 such that a row 84 of circumferentially adjacent blades 74 extends radially outward from the perimeter of each disk 80, i.e., adjacent blades 74 within row 84 are spaced apart from one another along a circumferential direction C and each blade 74 extends from disk 80 along the radial direction R. Each blade 74 in row 84 of blades 74 includes an airfoil 86 having a pressure side 88 opposite a suction side 90. Opposite pressure and suction sides 88, 90 of each airfoil 86 extend radially along a blade span $s_b$ from a blade root 92 to a blade tip 94. As depicted, blade root 92 is the radially innermost portion of blade 74 and blade tip 94 is the radially outermost portion of blade 74. Thus, blade root 92 is positioned at or near the inner end wall defined by disk 80 and blade tip 94 terminates at or near the outer end wall defined by casing 18. Further, it will be readily understood that, as is generally well-known in the art, blade root 92 may define a projection having a dovetail or other shape for receipt in a complementarily shaped slot in disk 80 to couple blade 74 to disk 80. Of course, blades 74 may be coupled to disks 80 in other ways as well.

As shown in FIG. 3, a blade pitch t is defined between adjacent blades 74 within the row 84 of blades. Blade pitch t is the circumferential spacing of blades 74 at a given blade span $s_b$. In other words, blade pitch t is the circumferential length at a given blade span $s_b$ divided by the number of blades 74 in the row 84 of blades 74 and, accordingly, may vary along blade span $s_b$.

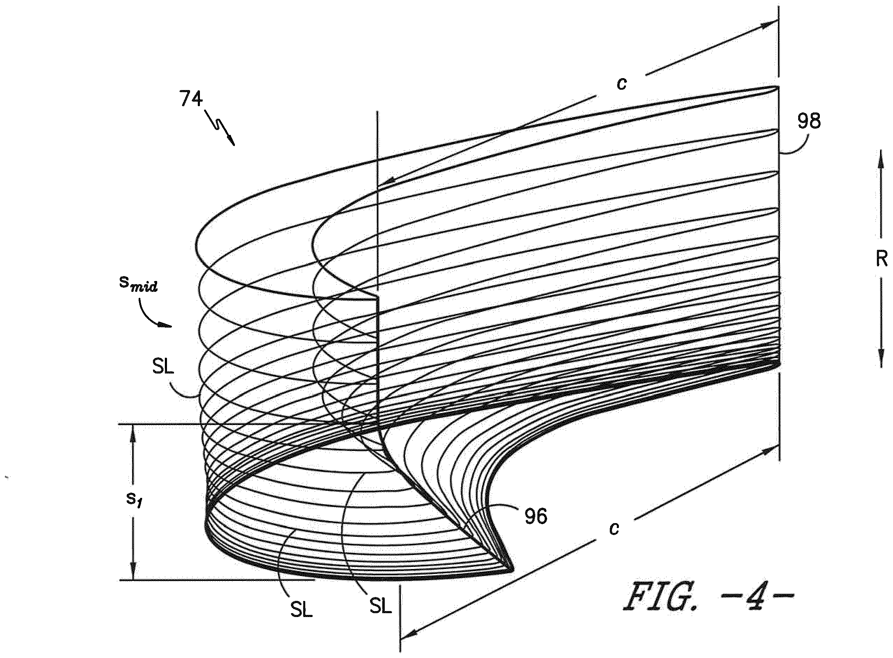

Blade span $s_b$ may include a plurality of blade span locations SL (FIG. 4). Each blade span location SL may correspond to a fraction or percentage of blade span $s_b$. For example, a first blade span location $SL_1$ may be located at about one-fourth of blade span $s_b$, such that first blade span location $SL_1$ corresponds to $\frac{1}{4} s_b$ or about 25% of blade span $s_b$. A second blade span location $SL_2$ may be located at about three-fourths of blade span $s_b$, such that second blade span location $SL_2$ corresponds to $\frac{3}{4} s_b$ or about 75% of blade span $s_b$. Thus, blade span locations SL may include any number of locations along blade span $s_b$ from a location corresponding to zero at blade root 92 (i.e., a fraction of 0 or 0% of blade span $s_b$) to a location corresponding to $s_b$ at blade tip 94 (i.e., a fraction of 1 or 100% of blade span $s_b$).

Airfoil 86 of blade 74 may define one or more span regions along blade span $s_b$. As an example, airfoil 86 may define a first span region $s_1$ adjacent blade root 92 and a second span region $s_2$ adjacent blade tip 94. A mid-span region $s_{mid}$ also may be defined, e.g., between first blade span location $SL_1$ and second blade span location $SL_2$ or generally between first span region $s_1$ and second span region $s_2$. As previously stated, first blade span location $SL_1$ is located at about one-fourth or 25% of blade span $s_b$ and second blade span location $SL_2$ is located at about three-fourths or 75% of blade span $s_b$. Thus, the mid-span region may comprise about the middle one-half or middle 50% of blade span $s_b$.

As further shown in FIG. 3, pressure and suction sides 88, 90 of airfoil 86 extend axially between a leading edge 96 and an opposite trailing edge 98. Airfoil 86 defines a chord c extending axially between opposite leading and trailing edges 96, 98. As will be readily understood, a chord c may be defined at each blade span location SL. Thus, the axial length of chord c may vary along the blade span $s_b$.

Referring now to FIG. 4, a perspective view of a portion of airfoil 86 according to an exemplary embodiment of the present subject matter, chords c in mid-span region $s_{mid}$ of each blade 74 are shorter than chords c in first span region $s_1$ adjacent blade root 92 and second span region $s_2$ adjacent blade tip 94. That is, the axial distance from leading edge 96 to trailing edge 98 is shorter in the mid-span region $s_{mid}$ than the axial distance from leading edge 96 to trailing edge 98 in the span regions near blade root 92 and blade tip 94. More particularly, the chord c may be reduced with respect to leading edge 96, trailing edge 98, or both leading and trailing edges 96, 98. As one example, the leading edge 96 of blade 74 may be axially closer to the trailing edge 98 in mid-span region $s_{mid}$ than in first span region $s_1$ or second span region $s_2$. As another example, trailing edge 98 of blade 74 may be axially closer to leading edge 96 in mid-span region $s_{mid}$ than in first span region $s_1$ or second span region $s_2$. Alternatively, as shown schematically in FIG. 2, both leading edge 96 and trailing edge 98 may be moved axially inward within mid-span region $s_{mid}$ such that the chord c is reduced in mid-span region $s_{mid}$ compared to first span region $s_1$ and second span region $s_2$.

In an exemplary embodiment, the chord length in the mid-span region $s_{mid}$ may be reduced by about 5% to about 25% compared with typical turbine rotor blades. In a particular embodiment, the length of chord c in the mid-span region $s_{mid}$ may be reduced by about 12% from the chord length in the mid-span region of known turbine rotor blades.

By reducing the length of chord c in the mid-span region $s_{mid}$ of blades 74, a weight of turbine assembly 75 can be reduced, which can help increase the efficiency of turbofan engine 10. Further, reducing the length of chord c in the mid-span region $s_{mid}$ can reduce a solidity σ of blades 74 in the mid-span region $s_{mid}$, thereby increasing the efficiency of turbine assembly 75 while avoiding secondary flow losses at or near the end walls defined by disks 80 and outer casing 18. The solidity σ of blades 74 is the ratio of the blade chord c, represented by its length, over the blade pitch t, which, as described, is the circumferential spacing of blades 74 at a given blade span $s_b$. In known devices, solidity σ of blades 74 may be maintained at higher values to help avoid secondary flow losses. However, in exemplary embodiments of the present subject matter, a longer length of chord c at or near blade root 92 and blade tip 94 helps avoid secondary flow losses in the regions of blade roots and tips 92, 94 while a shorter length of chord c in the mid-span region $s_{mid}$ of blades 74 helps increase the efficiency of turbine assembly 75. Thus, any increase in secondary flow losses resulting from the reduction of the length of chords c can be controlled by selectively reducing the length of certain chords c, which tailors the surface velocity distribution such that the secondary flow losses can be controlled and/or managed.

In addition, reducing the length of chord c in the mid-span region $s_{mid}$ can increase the Zweifel lift coefficient of blades 74. The Zweifel lift coefficient of blades 74 is a dimensionless loading coefficient representing a ratio of actual force to a reference force that assumes a constant pressure on the pressure surface of the blade and a constant pressure on the suction surface of the blade. More particularly, the Zweifel coefficient, Z, is defined as

$$Z = 2\left(\frac{t}{c}\right)cos2(\beta_2)[tan(\beta_1) - tan(\beta_2)]$$

where t is the blade pitch, c is the axial chord length, and $\beta_1$ and $\beta_2$ represent the inlet angle and exit angle, respectively. In embodiments of the present subject matter, the inlet angle $\beta_1$ is positive, i.e., $\beta_1 > 0$, and the outlet angle $\beta_2$ is negative, i.e., $\beta_2 < 0$. The Zweifel coefficient of each blade 74 is within the range of 1.2 to 1.3.

The solidity $\sigma$ and Zweifel coefficient of blades 74 of turbine assembly 75 also may be optimized by reducing the number of blades 74 in each row 84 of blades. For example, each row 84 of blades 74 comprises about 5% to about 30% fewer blades than a typical turbine stage. In one embodiment, one row 84 of blades 74 comprises about 5% fewer blades than a similar typical turbine stage, and a second row 84 of blades 74 comprises about 15% fewer blades than a similar typical turbine stage. In an alternative embodiment, one row 84 of blades 74 comprises about 10% fewer blades than a similar typical turbine stage, and a second row 84 of blades 74 comprises about 25% fewer blades than a similar typical turbine stage. Moreover, in an exemplary embodiment, the number of blades 74 is reduced and the length of chords c in the mid-span region $s_{mid}$ of blades 74 is reduced in one or more rows 84 of blades 74 of turbine assembly 75.

Referring to FIG. 3, in still other embodiments, a stagger angle $\lambda$ of blades 74 may be optimized to reduce and/or minimize secondary flow losses at the end walls defined by disks 80 and outer casing 18. The stagger angle $\lambda$ is the angle between a chord line H and the turbine axial direction A. Each blade 74 has a stagger angle $\lambda$ within a range of 10° to 80°. In alternative embodiments, each blade 74 may have a stagger angle $\lambda$ within the range of about 15° to about 60°. Other stagger angles $\lambda$ may be used as well, but in general, optimal stagger angles are reduced from known values for the stagger angle of turbine rotor blades. Lower stagger angles can provide lower end wall losses and prevent end wall separation due to secondary flows.

It should be understood that the performance improvements described above are not limited to turbine rotor blade configurations but similarly apply to turbine stator vane configurations. Referring back to FIG. 2, as previously stated, turbine assembly 75 includes turbine stator vanes 72 coupled to outer casing 18. Like rotor blades 74, stator vanes 72 are arranged in rows of circumferentially adjacent vanes 72. Each vane 72 extends radially inward from an inner surface 19 of casing 18 toward rotor disk 80. Each vane 72 in the row of vanes 72 includes an airfoil 100. Each vane airfoil 100 includes opposite pressure and suction sides extending radially along a vane span $s_v$ from a vane root 102 at inner surface 19 of casing 18 to a vane tip 104 adjacent or near rotor disk 80. Further, a row 84 of blades 74 may be defined axially aft of a row of vanes 72 such that turbine assembly 75 is comprised of alternating rows of vanes 72 and blades 74 and such that a row of vanes 72 receives combustion gases 66 before a row 84 of blades 74. One row of vanes 72 and an adjacent row 84 of blades 74 defines one stage L of turbine assembly 75. In one exemplary embodiment, turbine assembly 75 comprises no more than twelve stages L, i.e., turbine assembly 75 comprises between one and twelve stages L.

Similar to blades 74, vane span $s_v$ may include a plurality of vane span locations, and each vane span location corresponds to a fraction or percentage of vane span $s_v$. For example, a first vane span location may be located at about one-fourth of vane span $s_v$, such that the first vane span location corresponds to about $\frac{1}{4}S_v$ or about 25% of vane span $s_v$. A second vane span location may be located at about three-fourths of vane span $s_v$, such that the second vane span location corresponds to about $\frac{3}{4}S_v$ or about 75% of vane span $s_v$. Thus, the vane span locations may include any number of locations along vane span $s_v$ from a location corresponding to zero at vane root 102 (i.e., a fraction of 0 or 0% of vane span $s_v$) to a location corresponding to $s_v$ at vane tip 104 (i.e., a fraction of 1 or 100% of vane span $s_v$).

Further, airfoil 100 of vanes 72 may define one or more span regions along vane span $s_v$. As an example, airfoil 100 may define a first span region adjacent vane root 102 and a second span region adjacent vane tip 104. A mid-span region also may be defined, e.g., between the first vane span location and the second blade span location or generally between the first vane span region and the second vane span region. As previously stated, the first vane span location is located at about one-fourth of vane span $s_v$ and the second vane span location is located at about three-fourths of vane span Thus, the mid-span region may comprise about the middle one-half or middle 50% of vane span $s_v$

Moreover, each vane airfoil 100 may define a chord c extending axially between opposite leading and trailing edges of the airfoil. Like blades 74, a chord may be defined at each vane span location, and the axial length of chord may vary along the vane span According to exemplary embodiments of the present subject matter, the chords in the mid-span region of each vane 72 are shorter than the chords in the first vane span region adjacent vane root 102 and the second vane span region adjacent vane tip 104. That is, the axial distance from the leading edge to the trailing edge of an airfoil 100 of vane 72 is shorter in the mid-span region than the axial distance from the leading edge to the trailing edge in the span regions near vane root 102 and vane tip 104. More particularly, the chord may be reduced with respect to the leading edge, trailing edge, or both the leading and trailing edges of vane 72. As one example, the leading edge of vane 72 may be axially closer to the trailing edge in the mid-span region of vane 72 than in the first vane span region or the second vane span region. As another example, as shown schematically in FIG. 2, the trailing edge of vane 72 may be axially closer to the leading edge in the mid-span region than in the first vane span region or the second vane span region. Alternatively, both the leading edge and trailing edge may be moved axially inward within the mid-span region such that the chord is reduced in the mid-span region compared to the first vane span region and the second vane span region.

In an exemplary embodiment, the chord length in the mid-span region may be reduced by about 5% to about 25% compared with typical turbine stator vanes. In a particular embodiment, the chord length in the mid-span region of vanes 72 may be reduced by about 12% from the chord length in the mid-span region of known turbine stator vanes.

Similar to the reduction of the length of chords c of blades 74, reducing the chord length in the mid-span region of vanes 72 can reduce the weight of turbine assembly 75, which can help increase the efficiency of turbofan engine 10. Further, reducing the chord length in the mid-span region can reduce the solidity $\sigma$ of vanes 72 (i.e., the ratio of the vane chord length to the vane pitch, or circumferential spacing between vanes 72 in a row of vanes 72) in the mid-span region, thereby increasing the efficiency of turbine assembly 75 while avoiding secondary flow losses at or near the end walls defined by disks 80 and outer casing 18 because of the longer chord length at the roots 102 and tips 104 of vanes 72. As previously described, the solidity $\sigma$ may be maintained at higher values in known devices to help avoid secondary flow losses. However, in exemplary embodiments of the present subject matter, a longer chord length at or near vane root 102 and tip 104 helps avoid secondary flow losses in the regions of vane roots and tips 102, 104 while a shorter chord length in the mid-span region of vanes 72 helps increase the efficiency of turbine assembly 75. Thus, any increase in secondary flow losses resulting from the reduction of the chord length can be controlled by selectively reducing the length of certain chords, which tailors the surface velocity distribution such that the secondary flow losses can be controlled and/or managed.

In addition, reducing the chord length in the mid-span region can increase the Zweifel lift coefficient of vanes 72 (i.e., the dimensionless loading coefficient of vanes 72). In an exemplary embodiment, each vane 72 has a Zweifel coefficient within a range of about 1.1 to about 1.7. In another exemplary embodiment, the Zweifel coefficient of each vane 72 may be within the range of about 1.2 to about 1.3.

The solidity $\sigma$ and Zweifel coefficient of vanes 72 of turbine assembly 75 also may be optimized by reducing the number of vanes 72 in each row of vanes 72. For example, each row of vanes 72 comprises about 5% to about 30% fewer vanes than a typical turbine stage. In one embodiment, one row of vanes 72 comprises about 5% fewer vanes than a similar typical turbine stage, and a second row of vanes 72 comprises about 15% fewer vanes than a similar typical turbine stage. In an alternative embodiment, one row of vanes 72 comprises about 10% fewer vanes than a similar typical turbine stage, and a second row of vanes 72 comprises about 25% fewer vanes than a similar typical turbine stage. Moreover, in an exemplary embodiment, both the number of vanes 72 and the chord length in the mid-span region of vanes 72 are reduced in one or more rows of vanes 72 of turbine assembly 75.

In still other embodiments, the stagger angle of vanes 72 may be optimized to reduce and/or minimize secondary flow losses at the end walls defined by disks 80 and outer casing 18. In an exemplary embodiment, each vanes 72 may have a stagger angle within a range of about 10° to about 80°. In alternative embodiments, each vanes 72 may have a stagger angle within the range of about 15° to about 60°. Other stagger angles may be used as well, but in general, optimal stagger angles are reduced from known values for the stagger angle of turbine stator vanes. As discussed with respect to blades 74, lower stagger angle values can provide lower end wall losses and prevent end wall separation due to secondary flows.

Employing any of the techniques or configurations described herein alone or in combination can optimize the configuration of vanes 72, blades 74, rows of vanes 72, and/or rows 84 of blades 74 such that competing performance parameters, such as, e.g., secondary flow losses, weight, and efficiency, as well as other performance parameters, can be optimized. As one example, reducing the solidity $\sigma$ only in select regions, areas, or portions of blade span $s_b$ can help improve the efficiency of turbine assembly 75 while controlling any increase in secondary flow losses resulting from reduced solidity $\sigma$. Similarly, reducing the solidity $\sigma$ only in select regions, areas, or portions of vane span $s_v$ can help improve the efficiency of turbine assembly 75 while controlling any increase in secondary flow losses resulting from reduced solidity $\sigma$. Moreover, other performance improvements also may be realized. For example, in cooled turbines, a reduced number of airfoils, such as blades 74 or vanes 72, can reduce the required cooling flow. The present subject matter may lead to other advantages or benefits as well.

Further, although the present subject matter has been described with respect to a low pressure turbine section of a gas turbine engine, it will be readily understood that the design considerations and configurations described above also may apply to other components and/or sections of a gas turbine engine. For example, the present subject matter may be applicable to both low and high speed low pressure turbines. As another example, while described above with respect to LP turbine section 30 of turbofan engine 10, the present subject matter also may be utilized in HP turbine section 28. Alternatively or additionally, the present subject matter may be utilized in other configurations of turbofan engine 10 or in other types or configurations of gas turbine engines.

This written description uses examples to disclose the invention, including the best mode, and also to enable any person skilled in the art to practice the invention, including making and using any devices or systems and performing any incorporated methods. The patentable scope of the invention is defined by the claims.

**Claims**

1. A turbine assembly for a gas turbine engine, the turbine assembly comprising:

   a casing (18) having an inner surface (19) and extending circumferentially about an axial centerline (12), the casing (18) defining a radially outer boundary of the turbine assembly;
   a disk (80) positioned coaxially within the casing (18), the disk (80) having a rim, the rim of the disk (80) defining a perimeter of the disk (80);
   a row of circumferentially adjacent turbine stator vanes (72) extending radially inward from the inner surface (19) of the casing (18);
   a row (84) of circumferentially adjacent turbine rotor blades (74) extending radially outward from the perimeter of the disk (80), the row of blades (74) positioned adjacent the row of vanes (72),
   wherein each blade (74) in the row of blades includes an airfoil (86), each airfoil (86) having opposite pressure (88) and suction sides (90) extending radially along a blade span ($s_b$) from a blade root (92) to a blade tip (94), the blade span ($s_b$) including a plurality of blade span locations (SL), each blade span location (SL) corresponding to a fraction of the blade span ($s_b$), wherein each airfoil (86) defines a chord ($c$) at each blade span location (SL), the chords ($c$) extending axially between opposite leading (96) and trailing edges (98) of the airfoil (86), and wherein the chords ($c$) in a mid-span region ($s_{mid}$) of each blade (74) are shorter than the chords ($c$) in a span region ($s_1$) adjacent the blade root (92) and a span region ($s_2$) adjacent the blade tip (94), wherein each blade (74) has a stagger angle ($\lambda$) within a range of 10° to 80°, **characterized in that** the shorter chord length in the mid-span region of each blade is such that each blade (74) has a Zweifel coefficient within a range of 1.2 to 1.3.

2. The turbine assembly of claim 1, wherein the mid-span region ($s_{mid}$) of each blade (74) extends from a first blade span location ($SL_1$) to a second blade span location ($SL_2$), wherein the first blade span location ($SL_1$) is at about one-fourth of the blade span ($s_b$) and the second blade span location ($SL_2$) is at about three-fourths of the blade span ($s_b$).

3. The turbine assembly of either of claim 1 or 2, wherein each vane (72) in the row of vanes (72) extends radially inward from the inner surface (19) of the casing (18), each vane (72) in the row of vanes (72) including an airfoil (100) having opposite pressure and suction sides extending radially along a vane span ($s_v$) from a vane root (102) to a vane tip (104), the vane span ($s_v$) including a plurality of vane span locations, each vane span location corresponding to a fraction of the vane span ($s_v$), wherein each vane airfoil (100) defines a chord ($c$) at each vane span location, the chord ($c$) extending axially between opposite leading and trailing edges of the airfoil (100), and wherein the chords ($c$) in a mid-span region of each vane (72) are shorter than the chords ($c$) in a span region adjacent the vane root (102) and a span region adjacent the vane tip (104).

4. The turbine assembly of claim 3, wherein the mid-span region of each vane (72) extends from a first vane span location to a second vane span location, wherein the first vane span location is at about one-fourth of the vane span ($s_v$) and the second vane span location is at about three-fourths of the vane span ($s_v$).

5. The turbine assembly of any preceding claim, wherein the row of vanes (72) and the adjacent row of blades (74) define one stage (L) of the turbine assembly, and wherein the turbine assembly comprises no more than twelve stages (L).

**Patentansprüche**

1. Turbinenanordnung für ein Gasturbinentriebwerk, wobei die Turbinenanordnung Folgendes umfasst:

   ein Gehäuse (18) mit einer Innenoberfläche (19), das sich in Umfangsrichtung um eine axiale Mittellinie (12) erstreckt, wobei das Gehäuse (18) eine radial äußere Grenze der Turbinenanordnung definiert;
   eine Scheibe (80), die koaxial in dem Gehäuse (18) angeordnet ist, wobei die Scheibe (80) einen Rand aufweist, wobei der Rand der Scheibe (80) einen Umfang der Scheibe (80) definiert;
   eine Reihe von in Umfangsrichtung benachbarten Turbinenstatorschaufeln (72), die sich von der Innenoberfläche (19) des Gehäuses (18) aus radial nach innen erstrecken;
   eine Reihe (84) umfangsmäßig benachbarter Turbinenrotorblätter (74), die sich vom Umfang der Scheibe (80) aus radial nach außen erstrecken, wobei die Reihe von Blättern (74) neben der Reihe von Schaufeln (72) angeordnet ist, wobei jedes Blatt (74) in der Reihe von Blättern ein Luftleitblech (86) enthält, wobei jedes Luftleitblech (86) einander entgegengesetzte Druck- (88) und Saugseiten (90) aufweist, die sich radial entlang einer Blattspannweite ($s_b$) von einem Blattfuß (92) zu einer Blattspitze erstrecken (94), wobei die Blattspannweite ($s_b$) mehrere Blattspannweitenstellen (SL) umfasst, wobei jede Blattspannweitenstelle (SL) einem Anteil der Blattspannweite ($s_b$) entspricht, wobei jedes Luftleitblech (86) eine Sehne ($c$) an jeder Blattspannweitenstelle (SL) definiert, wobei sich die Sehnen ($c$) axial zwischen einander gegenüberliegenden Vorder- (96) und Hinterkanten (98) des Luftleitblechs (86) erstrecken, und wobei die Sehnen ($c$) in einem Mittelspannweitenbereich ($s_{mid}$) jedes Blatts (74) kürzer sind als die Sehnen ($c$) in einem Spannweitenbereich ($s_1$) neben dem Blattfuß (92) und einem Spannweitenbereich ($s_2$) neben der Blattspitze (94), wobei jedes Blatt (74) einen Staffelungswinkel ($\lambda$) in einem Bereich von 10° bis 80° aufweist, **dadurch gekennzeichnet, dass** die kürzere Sehnenlänge im Mittelspannweitenbereich jedes Blatts derart ist, dass jedes Blatt (74) einen Zweifel-Koeffizienten in einem Bereich von 1,2 bis 1,3 aufweist.

2. Turbinenanordnung nach Anspruch 1, wobei der Mittelspannweitenbereich ($s_{mid}$) jedes Blatts (74) sich von einer ersten Blattspannweitenstelle ($SL_1$) zu einer zweiten Blattspannweitenstelle ($SL_2$) erstreckt, wobei die erste Blattspannweitenstelle ($SL_1$) ungefähr einem Viertel der Blattspannweite ($s_b$) entspricht und die zweite Blattspanne ($SL_2$) etwa drei Viertel der Blattspannweite ($s_b$) entspricht.

3. Turbinenanordnung nach Anspruch 1 oder 2, wobei jede Schaufel (72) in der Reihe von Schaufeln (72) sich von der Innenfläche (19) des Gehäuses (18) aus radial nach innen erstreckt, wobei jede Schaufel (72) in der Reihe von Schaufeln (72) ein Luftleitblech (100) mit einander entgegengesetzten Druck- und Saugseiten aufweist, die sich radial entlang einer Schaufelspannweite ($s_v$) von einem Schaufelfuß (102) zu einer Schaufelspitze (104) erstrecken, wobei die Schaufelspannweite ($s_v$) mehrere Schaufelspannweitenstellen enthält, wobei jede Schaufelspannweitenstelle einem Anteil der Schaufelspannweite ($s_v$) entspricht, wobei jedes Luftleitblech (100) an jeder Schaufelspannweitenstelle eine Sehne ($c$) definiert, wobei sich die Sehne ($c$) axial zwischen einander gegenüberliegenden Vorder- und Hinterkanten des Luftleitblechs (100) erstreckt und wobei die Sehnen ($c$) in einem Mittelspannweitenbereich jeder Schaufel (72) kürzer sind als die Sehnen ($c$) in einem Spannbereich neben der Schaufelwurzel (102) und in einem Spannbereich neben der Schaufelspitze (104).

4. Turbinenanordnung nach Anspruch 3, wobei der Mittelspannweitenbereich jeder Schaufel (72) sich von einer ersten Schaufelspannweitenstelle zu einer zweiten Schaufelspannweitenstelle erstreckt, wobei die erste Schaufelspannweitenstelle etwa einem Viertel der Schaufelspannweite ($s_v$) entspricht und die zweite Schaufelspannweitenstelle etwa drei Viertel der Schaufelspannweite ($s_v$) entspricht.

5. Turbinenanordnung nach einem der vorangehenden Ansprüche, wobei die Reihe von Schaufeln (72) und die benachbarte Reihe von Blättern (74) eine Stufe (L) der Turbinenanordnung definieren und wobei die Turbinenanordnung nicht mehr als zwölf Stufen (L) umfasst.

## Revendications

1. Ensemble turbine pour une turbine à gaz, l'ensemble turbine comprenant :

   un carter (18) présentant une surface interne (19) et s'étendant circonférentiellement autour d'une ligne centrale axiale (12), le carter (18) définissant une limite radialement extérieure de l'ensemble turbine ;
   un disque (80) positionné coaxialement à l'intérieur du carter (18), le disque (80) présentant un bord, le bord du disque (80) définissant un périmètre du disque (80) ;
   une rangée d'aubes de stator de turbine (72) circonférentiellement adjacentes, s'étendant radialement vers l'intérieur depuis la surface intérieure (19) du carter (18) ;
   une rangée (84) de pales de rotor de turbine (74) circonférentiellement adjacentes, s'étendant radialement vers l'extérieur depuis le périmètre du disque (80), la rangée de pales (74) étant positionnée de manière adjacente à la rangée d'aubes (72), chaque pale (74) de la rangée de pales comprenant une surface portante (86), chaque surface portante (86) présentant une pression opposée (88) et des côtés d'aspiration (90) s'étendant radialement le long d'une envergure de pale ($s_b$) allant d'une emplanture de pale (92) à une extrémité de pale (94), l'envergure de pale ($s_b$) comprenant une pluralité d'emplacements d'envergure de pale (SL), chaque emplacement d'envergure de pale (SL) correspondant à une fraction de l'envergure de pale ($s_b$), chaque surface portante (86) définissant une membrure ($c$) à chaque emplacement d'envergure de pale (SL), les membrures ($c$) s'étendant axialement entre les bords avant (96) et arrière (98) opposés de la surface portante (86), et les membrures ($c$) dans une région de mi-envergure ($s_{mid}$) de chaque pale (74) sont plus courtes que les membrures ($c$) dans une région d'envergure ($s_1$) adjacente à l'emplanture de pale (92) et une région d'envergure ($s_2$) adjacente à l'extrémité de la pale (94), chaque pale (74) présentant un angle de décalage ($\lambda$) compris entre 10° et 80°, **caractérisé en ce que** la longueur de membrure la plus courte dans la région de mi-envergure de chaque pale est telle que chaque pale (74) présente un coefficient de Zweifel compris dans une plage allant de 1,2 à 1,3.

2. Ensemble turbine selon la revendication 1, dans lequel la région de mi-envergure ($s_{mid}$) de chaque pale (74) s'étend d'un premier emplacement d'envergure de pale ($SL_1$) à un second emplacement d'envergure de pale ($SL_2$), le premier emplacement d'envergure de pale ($SL_1$) étant à environ un quart de l'envergure de pale ($s_b$) et le second emplacement d'envergure de pale ($SL_2$) est à environ trois quarts de l'envergure de pale ($s_b$).

3. Ensemble turbine selon la revendication 1 ou 2, dans lequel chaque aube (72) dans la rangée d'aubes (72) s'étend radialement vers l'intérieur depuis la surface intérieure (19) du carter (18), chaque aube (72) de la rangée d'aubes (72) comprenant une surface portante (100) présentant des côtés de pression et d'aspiration opposés s'étendant radialement le long d'une travée d'aube ($s_v$) depuis une emplanture d'aube (102) jusqu'à une extrémité d'aube (104), l'envergure d'aube ($s_v$) comprenant une pluralité d'emplacements d'envergure d'aube, chaque emplacement d'envergure d'aube correspondant à une fraction de l'envergure d'aube ($s_v$), chaque surface portante d'aube (100) définissant une membrure ($c$) à chaque emplacement d'envergure d'aube, la membrure ($c$) s'étendant axialement entre les bords avant et arrière opposés de la surface portante (100), et les membrures ($c$) dans une région de mi-envergure de chaque aube (72) sont plus courtes que les membrures ($c$) dans une région d'envergure adjacente à l'emplanture d'aube (102) et une région d'envergure adjacente à l'extrémité d'aube (104).

4. Ensemble turbine selon la revendication 3, dans lequel la région de mi-envergure de chaque aube (72) s'étend d'un premier emplacement d'envergure d'aube à un second emplacement d'envergure d'aube, le premier emplacement d'envergure d'aube étant à environ un quart de l'envergure d'aube ($s_v$) et le second emplacement d'envergure de palette étant à environ trois quarts de l'envergure d'aube ($s_v$).

5. Ensemble turbine selon l'une des revendications précédentes, dans lequel la rangée d'aubes (72) et la rangée adjacente de pales (74) définissent un étage (L) de l'ensemble turbine, et l'ensemble turbine comprenant au maximum douze étages (L).

FIG. -1-

EP 3 168 417 B1

FIG. -2-

FIG. -3-

FIG. -4-

EP 3 168 417 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20100284801 A1
- EP 1798377 A2
- EP 2921647 A1